# EUROPÄISCHE PATENTSCHRIFT

(11) **EP 2 724 910 B1**
(45) Veröffentlichungstag und Bekanntmachung des Hinweises auf die Patenterteilung: **11.04.2018**
(21) Anmeldenummer: 13188507.1
(22) Anmeldetag: 14.10.2013
(51) Int. Cl.: B60W 30/08, B60T 8/1755

(54) **Verfahren und Vorrichtung zum Reduzieren von medizinischen Unfallfolgen bei unvermeidbaren Unfällen im Querverkehr**
Method and device for reducing the medical consequences of unavoidable accidents in cross traffic
Procédé et dispositif de réduction des conséquences médicales d'accidents pour des accidents inévitables provenant du trafic transversal

(30) Priorität: 26.10.2012 DE 102012021004
(43) Veröffentlichungstag der Anmeldung: 30.04.2014
(73) Patentinhaber: Volkswagen Aktiengesellschaft, 38440 Wolfsburg (DE)
(72) Erfinder: Heck, Philip, 38104 Braunschweig (DE); Junge, Dr. Mirko, 31134 Hildesheim (DE); Wohliebe, Thomas, 38547 Calberlah (DE)

(56) Entgegenhaltungen:
- WO-A1-2005/001792
- DE-A1-102008 005 310

## Beschreibung

Die Erfindung betrifft Maßnahmen zur Milderung von Auswirkungen von Unfällen, insbesondere zur Reduzierung einer Wahrscheinlichkeit des Auftretens von Personenschäden bei einem Seitenaufprall auf ein Kraftfahrzeug.

Systeme zur Milderung von Unfallfolgen sind für bestimmte Verkehrs- und Unfallsituationen bereits bekannt. Diese Systeme sind in der Regel für Unfälle im Längsverkehr ausgelegt, d. h. für Unfälle in Form von Frontalzusammenstößen oder Auffahrunfällen.

So offenbart die Druckschrift DE 102 029 08 A1 beispielsweise ein Verfahren, das Sicherheitseinrichtungen, beispielsweise zur Ansteuerung von Gurtstraffern oder elektromagnetisch betriebenen Paddings zur Einstellung einer Knie-, Fuß-, Genick- oder Kopfposition, umfasst. Die Sicherheitseinrichtungen werden bei Auftreten einer Fahrsituation, die zu einem unvermeidlichen Auffahrunfall führt, gestrafft bzw. aktiviert.

Weiterhin sind aus der Druckschrift WO 2005/047066 A1 ein Verfahren und eine Einrichtung zur Verringerung von Unfallschäden bekannt, bei denen ein Fahrzeugführer keine Möglichkeiten hat, ein verunfalltes Kraftfahrzeug nach dem Unfall in eine sichere Position zu überführen. Dabei ist vorgesehen, dass durch Bremsen oder Lenken Eingriffe in das Fahren des Kraftfahrzeugs vorgenommen werden, nachdem ein Unfall aufgetreten ist. So kann das Kraftfahrzeug sicher zum Stillstand gebracht werden oder möglichen Hindernissen ausgewichen werden, wenn der Fahrer die Kontrolle über sein Kraftfahrzeug verloren hat, weil er das Bewusstsein verloren hat oder unter Schock steht.

Die Druckschrift DE 10 328 062 A1 offenbart ein Verfahren zur Verbesserung der Sicherheit von an einem Unfall beteiligten Verkehrsteilnehmern, wobei nach Erkennen eines unvermeidbaren Unfalls das Kraftfahrzeug automatisch betrieben wird, so dass die Unfallfolgen für unmittelbar und mittelbar beteiligte Verkehrsteilnehmer reduziert werden.

Des Weiteren beschreibt die Druckschrift DE 10 2004 058 139 A1 ein Verfahren für ein Schutzsystem in einem Kraftfahrzeug zur Minderung von Unfallfolgen, wobei eine Sicherheitseinrichtung ausgelöst wird, wenn ein fahrdynamisch kritischer Zustand ermittelt und eine Geschwindigkeitsschwelle durch die Fahrzeugeigengeschwindigkeit überschritten wird, wobei eine Relativgeschwindigkeit zwischen dem Kraftfahrzeug und einem Aufprallobjekt ermittelt wird. Überschreitet die Relativgeschwindigkeit eine Geschwindigkeitsschwelle, so wird eine der Sicherheitseinrichtungen ausgelöst.

Aus der Druckschrift WO 2010/040376 A1 ist ein Verfahren zur Minderung von Kollisionsrisiken bekannt, wobei bei einer drohenden Kollision zwischen Kraftfahrzeugen ein Risikoprofil drahtlos übermittelt wird. Das übermittelte Risikoprofil kann bei Maßnahmen zur Milderung von Kollisionsfolgen berücksichtigt werden.

Die bisherigen Konzepte zur Milderung von Unfallfolgen zielen darauf ab, vor der Kollision Energie aus dem System zu nehmen, um den durch den Unfall verursachten Schaden an den beteiligten Kraftfahrzeugen (technische Unfallschwere) zu reduzieren und im Falle des Längsverkehrs auch den auftretenden möglichen Personenschaden (medizinische Unfallschwere) zu mildern. Bei diesen Maßnahmen wird das Kraftfahrzeug vor einem Aufprall abgebremst und so die Aufprallenergie für die zusammenstoßenden Kraftfahrzeuge verringert.

Die meisten der oben genannten Druckschriften betreffen Unfälle im Längsverkehr. Als eine weitere Kategorie von Unfällen treten vergleichsweise häufig Unfälle im Querverkehr auf, bei denen ein Kraftfahrzeug seitlich auf ein weiteres Kraftfahrzeug auffährt. Während die technische und medizinische Unfallschwere bei Unfällen im Längsverkehr korrelieren und im Wesentlichen von der Aufprallgeschwindigkeit abhängen, können die technische und medizinische Unfallschwere bei Unfällen im Querverkehr erheblich voneinander abweichen. Im Unterschied zu Unfällen im Längsverkehr wird bei einem Aufprall eines Kraftfahrzeugs auf eine Seite eines weiteren Kraftfahrzeugs die medizinische Unfallschwere nicht nur durch die Aufprallgeschwindigkeit, sondern auch durch die Auftreffposition, d. h. den Ort des Stoßpunkts des seitlich getroffenen Kraftfahrzeugs, bestimmt. Bei einer Reduzierung der Aufprallgeschwindigkeit wird daher nicht nur die Aufprallenergie verändert, sondern auch die Auftreffposition, da das seitlich gestoßene Kraftfahrzeug sich vor dem Aufprall weiter in Querrichtung bewegt. Im schlimmsten Fall kann bei einer Bremsung zur Minderung der Aufprallenergie aus einer seitlichen Vorderwagenkollision des gestoßenen Kraftfahrzeugs eine seitliche Kollision mit der Fahrgastzelle des gestoßenen Kraftfahrzeugs resultieren, wodurch die Unfallfolgen für die Insassen des gestoßenen Kraftfahrzeugs trotz Geschwindigkeitsreduktion bzw. reduzierter Aufprallenergie erheblich verschlimmert werden.

Aus der WO 2005/001792 A1 ist ferner ein Verfahren zur Verringerung des Verletzungsrisikos von Fahrzeuginsassen bekannt, bei dem bei einem unvermeidbaren Seitenaufprall eines ersten Kraftfahrzeugs auf ein zweites Kraftfahrzeug ein Abbremsen einzelner Räder und/oder ein Lenkeingriff erfolgen. Hierdurch soll gezielt ein solcher Aufprallbereich erreicht werden, bei dem die Insassen des zweiten Kraftfahrzeugs nur minimal gefährdet werden. Als gewünschter Aufprallbereich werden ganz allgemein der seitliche Frontbereich (Motorbereich) oder der seitliche Heckbereich (Kofferraumbereich) angegeben.

Schließlich ist noch die DE 10 2008 005 310 A1 zu nennen. Bei dieser Schrift geht es um das Thema des Eigenschutzes von Fahrzeuginsassen eines ersten Kraftfahrzeugs, welches einem unvermeidbaren Aufprall auf ein Hindernis bzw. auf ein weiteres Kraftfahrzeug ausgesetzt ist.
Um die Unfallfolgen für die Insassen des ersten Kraftfahrzeugs gering zu halten, wird die Bewegungstrajektorie des ersten Kraftfahrzeugs durch Regelung des Radschlupfes bzw. durch aktiven Eingriff in die Lenkung derart beeinflusst, dass sich ein für das erste Kraftfahrzeug günstiger Aufprallbereich auf das Hindernis bzw. auf das weitere Kraftfahrzeug ergibt.
Als günstige Aufprallbereiche werden bei einer PKW/PKW-Kollision ausschließlich die Knautschzonen genannt. Für den Fall einer PKW/LKW-Kollision wird als erstrebenswerter Kollisionsbereich der Bereich der Reifen genannt, um ein Unterfahren des LKWs mit größtmöglichen Personenschäden auf Seiten des PKWs zu vermeiden.

Es ist daher Aufgabe der vorliegenden Erfindung, bei einem unvermeidbaren Aufprall auf eine Seite eines Personenkraftwagens, die Unfallschwere, insbesondere die medizinische Unfallschwere für die Insassen des getroffenen Personenkrtaftwagens, zu reduzieren.

Diese Aufgabe wird durch das Verfahren zum Betreiben eines Kraftfahrzeugs bei Erkennen eines unvermeidbaren Aufpralls auf eine Seite eines weiteren Kraftfahrzeugs gemäß Anspruch 1 gelöst.

Weitere vorteilhafte Ausgestaltungen der vorliegenden Erfindung sind in den abhängigen Ansprüchen angegeben.

Gemäß einem ersten Aspekt ist ein Verfahren zum Betreiben eines ersten Kraftfahrzeugs bei Erkennen eines unvermeidbaren Aufpralls auf eine Seite eines zweiten Kraftfahrzeugs vorgesehen. Das Verfahren umfasst die folgenden Teilschritte:
- Ermitteln einer seitlichen Auftreffposition auf das zweite Kraftfahrzeug bei ungebremster Fahrt des ersten Kraftfahrzeugs; und
- Durchführen eines Fahreingriffs in den Betrieb des ersten Kraftfahrzeugs abhängig von der ermittelten seitlichen Auftreffposition auf das zweite Kraftfahrzeug.

Die Idee dieser Teilschritte besteht darin, bei einem unvermeidbaren Unfall, bei dem ein erstes Kraftfahrzeug in eine Seite eines zweiten Kraftfahrzeugs stößt, in den Betrieb des ersten Kraftfahrzeugs einzugreifen, um die seitliche Auftreffposition des ersten Kraftfahrzeugs zu ändern. Die seitliche Auftreffposition sollte dabei zu einer Position geändert werden, hinter der nicht die Fahrgastzelle liegt. Da insbesondere Seitenaufprälle auf die Fahrgastzelle zu erheblichen medizinischen Unfallschweren führen können, kann durch die Vermeidung von Seitenaufprällen in diesem Bereich das Auftreten von Personenschäden deutlich reduziert werden.

Weiterhin kann das Durchführen eines Fahreingriffs ein Vornehmen des Fahreingriffs und/oder ein Unterbinden eines durch einen Fahrer des ersten Kraftfahrzeugs vorgenommenen Fahreingriffs und/oder ein Zulassen eines durch einen Fahrer des ersten Kraftfahrzeugs vorgenommenen Fahreingriffs umfassen.

Insbesondere kann als der Fahreingriff ein Eingriff zum Beschleunigen des ersten Kraftfahrzeugs oder ein Bremseingriff zum Bremsen des ersten Kraftfahrzeugs durchgeführt werden. Weiterhin kann als der Fahreingriff ein Lenkeingriff zum Lenken des ersten Kraftfahrzeugs durchgeführt werden. Insbesondere durch Fahreingriffe, wie Bremsen und Lenken, ergibt sich die Möglichkeit, die Auftreffposition des Seitenaufpralls zu variieren, so dass die Auftreffposition auf das zweite Kraftfahrzeug derart geändert wird, dass sie möglichst außerhalb des Bereichs liegt, hinter dem die Fahrgastzelle angeordnet ist.

Gemäß einer Ausführungsform kann die seitliche Auftreffposition auf das zweite Kraftfahrzeug mithilfe von Informationen über eine Querbewegung des zweiten Kraftfahrzeugs, insbesondere dessen Fahrgeschwindigkeit, über eine Position des zweiten Kraftfahrzeugs bezüglich des ersten Kraftfahrzeugs sowie über eine Eigengeschwindigkeit des ersten Kraftfahrzeugs ermittelt werden.

Weiterhin kann, wenn festgestellt wird, dass der Auftreffbereich bei ungebremster Fahrt des ersten Kraftfahrzeugs in einem Frontbereich des zweiten Kraftfahrzeugs liegt, ein Bremseingriff des Fahrers des ersten Kraftfahrzeugs unterbunden werden.

Es kann vorgesehen sein, dass, wenn festgestellt wird, dass der Auftreffbereich bei ungebremster Fahrt des ersten Kraftfahrzeugs in einem Frontbereich des zweiten Kraftfahrzeugs liegt, durch das erste Kraftfahrzeug ein Lenkeingriff in Fahrtrichtung des zweiten Kraftfahrzeugs vorgenommen wird.

Weiterhin kann, wenn festgestellt wird, dass der Auftreffbereich bei ungebremster Fahrt des ersten Kraftfahrzeugs in einem Fahrgastzellenbereich oder einem Heckbereich des zweiten Kraftfahrzeugs liegt, ein maximaler Bremseingriff vorgenommen werden.

Ferner kann, wenn festgestellt wird, dass der Auftreffbereich bei ungebremster Fahrt des ersten Kraftfahrzeugs in einem Fahrgastzellenbereich oder einem Heckbereich des zweiten Kraftfahrzeugs liegt, durch das erste Kraftfahrzeug ein Lenkeingriff entgegen der Fahrtrichtung des zweiten Kraftfahrzeugs vorgenommen werden.

Gemäß einem Grundgedanken der Erfindung wird vorgeschlagen, dass die ermittelte seitliche Auftreffposition auf das zweite Kraftfahrzeug derart bestimmt wird, dass die resultierende Kraft auf die Vorderachse oder die Hinterachse des zweiten Fahrzeugs gelenkt wird. Mit anderen Worten ist die gedachte verlängerte Vorderachse oder Hinterachse des zweiten Fahrzeugs die optimale ermittelte Auftreffposition.

Gemäß einem weiteren Aspekt kann eine Vorrichtung zum Betreiben eines ersten Kraftfahrzeugs bei Erkennen eines unvermeidbaren Aufpralls auf eine Seite eines zweiten Kraftfahrzeugs vorgesehen sein. Die Vorrichtung ist ausgebildet, um:
- eine seitliche Auftreffposition auf ein zweites Kraftfahrzeug bei ungebremster Fahrt des ersten Kraftfahrzeugs zu ermitteln; und
- um einen Fahreingriff in den Betrieb des ersten Kraftfahrzeugs abhängig von der ermittelten seitlichen Auftreffposition auf das zweite Kraftfahrzeug durchzuführen.

Gemäß einem weiteren Aspekt kann ein Kraftfahrzeug vorgesehen sein, umfassend:
- eine Erfassungseinheit zum Erfassen einer Information, aus der eine seitliche Auftreffposition auf das zweite Kraftfahrzeug ermittelbar ist;
- eine Fahreingriffseinrichtung zum Durchführen eines Fahreingriffs in den Betrieb des ersten Kraftfahrzeugs; und
- eine Vorrichtung, die ausgebildet ist, um die seitliche Auftreffposition auf ein zweites Kraftfahrzeug bei ungebremster Fahrt des ersten Kraftfahrzeugs zu ermitteln und um einen Fahreingriff durch die Fahreingriffseinrichtung abhängig von der ermittelten seitlichen Auftreffposition auf das zweite Kraftfahrzeug durchzuführen.

Gemäß einem weiteren Aspekt kann ein Computerprogrammprodukt vorgesehen sein, das einen Programmcode enthält, der, wenn er auf einer Datenverarbeitungseinrichtung ausgeführt wird, das obige Verfahren durchführt.

Bevorzugte Ausführungsformen der vorliegenden Erfindung werden nachfolgend anhand der beigefügten Zeichnungen näher erläutert. Es zeigen:
- Figur 1: eine schematische Längsschnittdarstellung durch ein erstes Kraftfahrzeug mit einem System zur Milderung von Unfallfolgen;
- Figur 2: eine Darstellung einer Situation kurz vor einem Seitenaufprall des ersten Kraftfahrzeugs der Figur 1 auf eine Seite eines zweiten Kraftfahrzeugs;
- Figur 3: ein Diagramm zur Darstellung des Verletzungsrisikos für Insassen des zweiten Kraftfahrzeugs abhängig von der Auftreffposition und der Aufprallgeschwindigkeit des ersten Kraftfahrzeugs; und
- Figur 4: ein Flussdiagramm zur Veranschaulichung des Verfahrens zum Mildern einer medizinischen Unfallschwere bei einem unvermeidbaren Aufprall des ersten Kraftfahrzeugs in eine Seite eines querenden zweiten Kraftfahrzeugs.

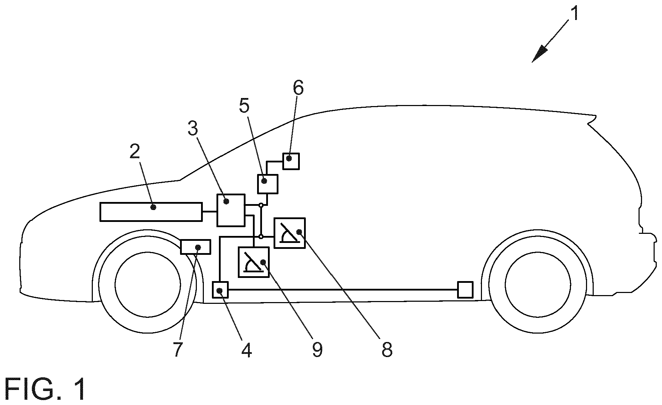

Figur 1 zeigt ein erstes Kraftfahrzeug 1 mit einem Antriebsmotor 2, der mithilfe eines Steuergeräts 3 betrieben wird. Der Betrieb erfolgt in bekannter Weise abhängig von einer Fahrervorgabe, beispielsweise durch Betätigen eines Fahrpedals 9. Zudem weist das erste Kraftfahrzeug 1 Bremseinheiten 4 als eine Fahreingriffseinrichtung auf, die in geeigneter Weise angesteuert werden können, um einen beispielsweise mithilfe eines Bremspedals 8 von einem Fahrer des ersten Kraftfahrzeugs 1 vorgegebenen Bremswunsch entsprechend einer Betätigung des Bremspedals 8 umzusetzen.

Es ist eine Einrichtung zur Milderung von Unfallfolgen, kurz UFM-Einrichtung 5 genannt, vorgesehen. Die UFM-Einrichtung 5 ist dazu in der Lage, durch Eingriff in das Steuergerät 3 und/oder durch unmittelbaren Bremseingriff auf die Bremseinheiten 4 und/oder durch Eingriff auf die Lenkung mithilfe einer Lenkeingriffseinrichtung 7 in den Betrieb des Kraftfahrzeugs 1 einzugreifen, wenn erkannt wurde, dass ein Unfall unvermeidbar bevorsteht.

Die UFM-Einrichtung 5 kann dazu mit einer oder mehreren Erfassungseinheiten 6 verbunden sein. Die Erfassungseinheiten 6 können eine in Fahrtrichtung ausgerichtete Kamera und/oder einen oder mehrere Abstandsdetektoren und/oder eine sonstige Kommunikationseinheit umfassen, um geeignete Informationen über die Umgebung des ersten Kraftfahrzeugs 1 bzw. das umgebende Verkehrsgeschehen zu erhalten, aus denen Hinweise auf einen bevorstehenden Aufprall ermittelt werden können. Insbesondere ist die hier betrachtete UFM-Einrichtung 5 in der Lage, anhand der durch die Erfassungseinheiten 6 ermittelten Informationen zu erkennen, ob ein Aufprall auf eine Seite eines zweiten, sich in Querrichtung zum Kraftfahrzeug 1 bewegenden Kraftfahrzeugs 10 bevorsteht. Insbesondere werden aus den Erfassungseinheiten 6 Informationen über die Geschwindigkeit v_{q} des querenden zweiten Kraftfahrzeugs 10, den Abstand d_{A} zu dem querenden zweiten Kraftfahrzeug 10 sowie die Eigengeschwindigkeit v_{E} des ersten Kraftfahrzeugs 1 bereitgestellt.

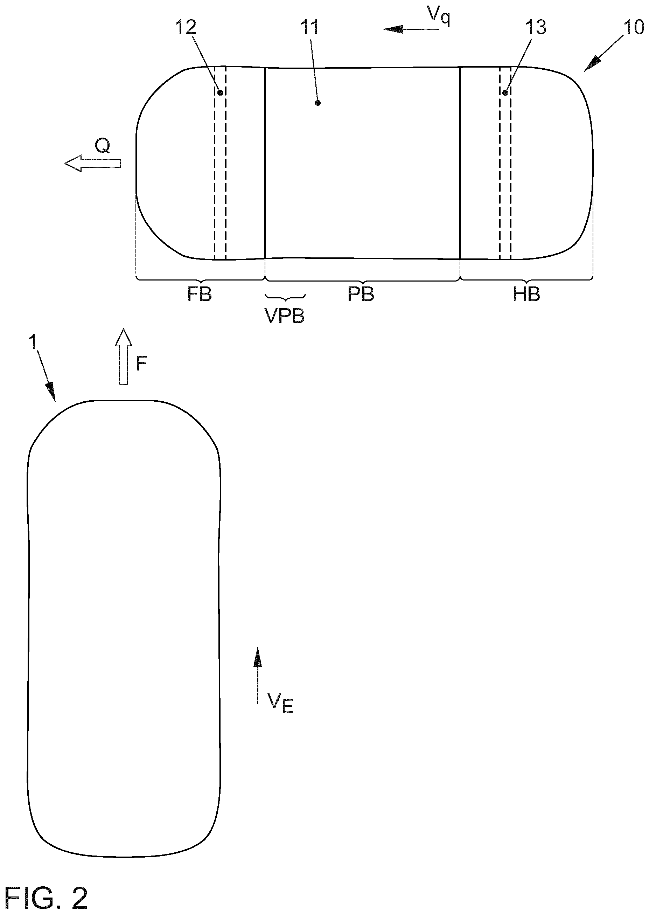

In Figur 2 ist in einer Draufsicht eine Verkehrssituation dargestellt, in der sich das erste Kraftfahrzeug 1, das sich in Fahrtrichtung F mit einer Eigengeschwindigkeit v_{E} bewegt, dem zweiten Kraftfahrzeug 10, das sich in einer Querrichtung Q dazu mit der Geschwindigkeit v_{q} bewegt, nähert. Die Eigengeschwindigkeit v_{E} in der Fahrtrichtung F des ersten Kraftfahrzeugs 1 sei dabei als so hoch angenommen, dass ein Aufprall auf die linke Seite des querenden zweiten Kraftfahrzeugs 10 unvermeidbar ist, d.h. selbst durch einen Bremseingriff mit größtmöglicher Bremskraft nicht abgewendet werden kann.

Durch das Vorsehen von Maßnahmen zur Unfallvermeidung, hauptsächlich durch Vornehmen eines Bremseingriffs, kann die seitliche Auftreffposition auf die Seite des querenden zweiten Fahrzeugs 10 bezüglich der Position bei einer ungebremsten Fahrt des ersten Kraftfahrzeugs 1 an dem querenden zweiten Kraftfahrzeug 10 nach hinten verschoben werden. Die medizinische Unfallschwere, d. h. die Wahrscheinlichkeit eines Auftretens von Personenschäden bei einem Seitenaufprall durch ein weiteres Kraftfahrzeug, hängt jedoch erheblich von der Auftreffposition bei einem Seitenaufprall ab. Insbesondere ein Seitenaufprall im Bereich einer Fahrgastzelle 11 des querenden zweiten Kraftfahrzeugs 10, d. h. innerhalb eines Fahrgastzellenbereichs PB, bewirkt eine deutlich erhöhte Wahrscheinlichkeit dafür, dass es bei den Insassen des zweiten Kraftfahrzeugs 10 zu Personenschäden kommt. Dagegen führt ein Seitenaufprall in einem Frontbereich FB und in einem Heckbereich HB zu deutlich geringeren Personenschäden, d. h. zu einer geringeren medizinischen Unfallschwere bzw. zu einer deutlich geringeren Wahrscheinlichkeit des Auftretens von Personenschäden. Insbesondere Auftreffpositionen an der Vorderachse 12 oder an der Hinterachse 13 des querenden zweiten Kraftfahrzeugs 10 führen zu der geringsten Beeinträchtigung der Fahrgastzelle 11, da dort die Aufnahmefähigkeit für resultierende Kräfte, insbesondere Querkräfte hoch ist.

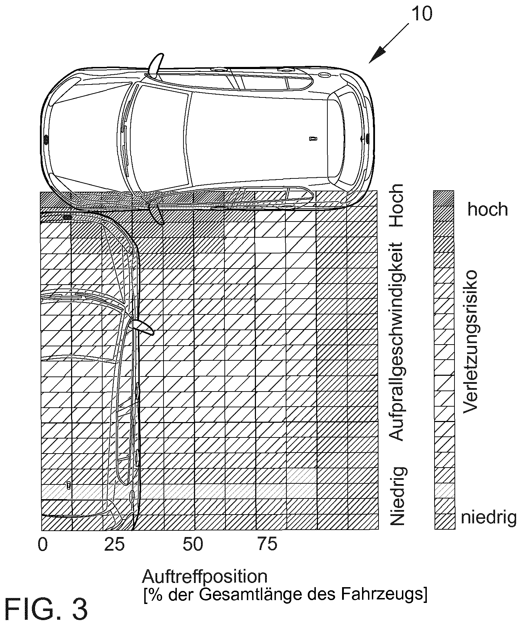

Anhand des in Figur 3 dargestellten Diagramms ist die medizinische Unfallschwere in Abhängigkeit von der Auftreffposition an dem querenden zweiten Kraftfahrzeug 10 sowie in Abhängigkeit von der Geschwindigkeit des ersten Kraftfahrzeugs 1 dargestellt. Man erkennt, dass die medizinische Unfallschwere insbesondere im Fahrgastzellenbereich PB besonders hoch ist, während bei einer Auftreffposition im Frontbereich FB oder im Heckbereich HB des querenden zweiten Kraftfahrzeugs 10 eine deutlich geringere Gefahr für das Auftreten von Personenschäden besteht.

Der Frontbereich FB ist dabei der vordere Bereich von der Vorderkante des Kraftfahrzeugs bis zu einer seitlichen Position, die in Längsrichtung von der Vorderkante um ca. 15-20% der Gesamtlänge des Kraftfahrzeugs entfernt ist, insbesondere bis zu einer Position, an der sich die Trennwand zum Motorraum des Kraftfahrzeugs befindet. Der Fahrgastzellenbereich PB schließt sich an den Frontbereich FB an und reicht bis zu einer seitlichen Position, die in Längsrichtung von der Vorderkante um ca. 60-75% der Gesamtlänge des Kraftfahrzeugs entfernt ist. Der Heckbereich HB schließt sich an den Fahrgastzellenbereich PB und reicht bis zu der Hinterkante des Kraftfahrzeugs. Alternativ kann die seitliche Position, die die Grenze zwischen dem Frontbereich FB und dem Fahrgastzellenbereich PB darstellt, durch ein in Seitenansicht der Fahrgastzelle zugewandten Ende des Vorderrades oder des vorderen Radkastens bestimmt sein. Entsprechend kann die seitliche Position, die die Grenze zwischen dem Fahrgastzellenbereich PB und dem Heckbereich HB darstellt, durch ein in Seitenansicht der Fahrgastzelle zugewandtes Ende des Hinterrades oder des hinteren Radkastens bestimmt sein.

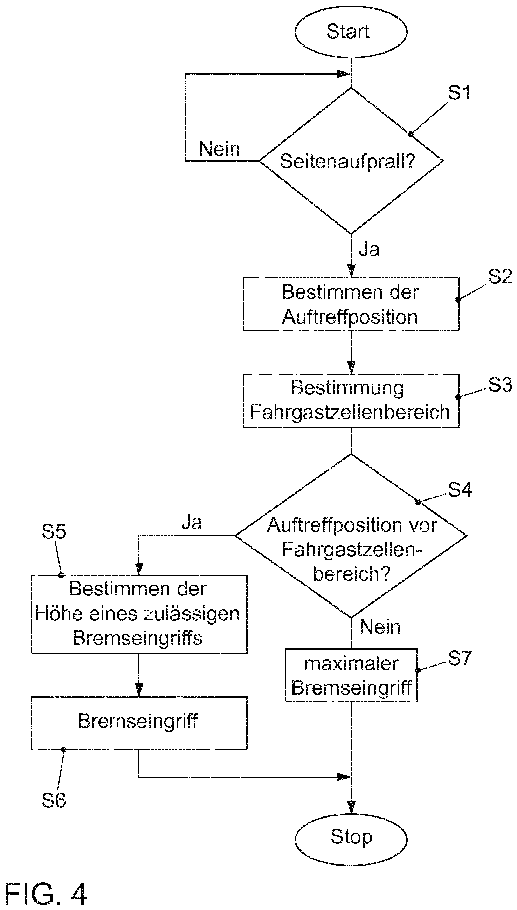

Nachfolgend wird anhand des Flussdiagramms der Figur 4 das Verfahren zum Reduzieren einer medizinischen Unfallschwere bei einem unvermeidbaren Aufprall des ersten Kraftfahrzeugs 1 in eine Seite des querenden zweiten Kraftfahrzeugs 10 ausführlicher besch rieben.

In Schritt S1 wird zunächst abgefragt, ob in der UFM-Einrichtung 5 festgestellt worden ist, dass ein Aufprall auf ein querendes zweites Kraftfahrzeug 10 unmittelbar bevorsteht, dieser unvermeidlich ist und ob der Aufprall auf die Seite des querenden zweiten Kraftfahrzeugs 10 erfolgen wird. Diese Erkennung kann mithilfe der von den Erfassungseinheiten 6 gelieferten Informationen durchgeführt werden. Insbesondere kann mithilfe der Kamera als Erfassungseinheit durch eine geeignete Mustererkennung einer seitlichen Kontur ein erkanntes zweites Kraftfahrzeug 10 als sich in Querrichtung bewegend erkannt werden. Auch kann durch Abstandsdetektoren erkannt werden, dass sich ein zweites Kraftfahrzeug 10 quer zur Fahrtrichtung des ersten Kraftfahrzeugs 1 bewegt, wenn sich der Abstand zu dem querenden zweiten Kraftfahrzeug 10 im Wesentlichen nur abhängig von der Eigengeschwindigkeit des ersten Kraftfahrzeugs 1 und dem Winkel des zweiten Kraftfahrzeugs 10 zur Fahrtrichtung des ersten Kraftfahrzeugs 1 ändert. Alternativ kann dem ersten Kraftfahrzeug 1 auf sonstige Weise, z. B. über die Kommunikationseinrichtung als Erfassungseinheit 6, mitgeteilt werden, dass sich ein zweites Kraftfahrzeug 10 in Querrichtung zu dem ersten Kraftfahrzeug 1 bewegt.

Wird in Schritt S1 festgestellt, dass ein Aufprall auf ein querendes zweites Kraftfahrzeug 10 unmittelbar bevorsteht, dieser unvermeidlich ist und dass der Aufprall auf eine Seite des querenden zweiten Kraftfahrzeugs 10 erfolgen wird (Alternative: Ja), so wird das Verfahren mit Schritt S2 fortgesetzt. Andernfalls (Alternative: Nein) wird zu Schritt S1 zurückgesprungen.

Anschließend wird in Schritt S2 die Auftreffposition auf das querende zweite Kraftfahrzeug 10 bei ungebremster Fahrt des Kraftfahrzeugs 1 ermittelt, wobei die Auftreffposition den Abstand der Auftreffposition auf der Seite des querenden zweiten Kraftfahrzeugs 10 von dessen Vorderkante in Richtung seiner Längsachse angibt.

Weiterhin wird in Schritt S3 der Fahrgastzellenbereich PB als erster Abstand von der Vorderkante des querenden zweiten Kraftfahrzeugs 10 und als zweiter Abstand von der Vorderkante des querenden zweiten Kraftfahrzeugs 10 ermittelt, beispielsweise anhand mithilfe der Kamera 6 erkannter Merkmale, wie z. B. der Position der Vorderachse 12 und der Hinterachse 13. Auf einen Algorithmus zur Erkennung des Fahrgastzellenbereichs PB wird hierin nicht näher eingegangen. In einfachen Systemen kann der Fahrgastzellenbereich PB grundsätzlich als der Bereich zwischen einer seitlichen Position bei 15% bzw. 20% der Fahrzeuglänge und 60 % bzw. 65% der Fahrzeuglänge, jeweils ausgehend von der Vorderkante, bestimmt werden. Diese Positionen und insbesondere die Fahrzeuglänge können z. B. durch Einsatz einer Mustererkennung in einem von einer Kamera aufgezeichneten Abbild des querenden Kraftfahrzeugs 10 bestimmt werden.

In Schritt S4 wird überprüft, ob die ermittelte Auftreffposition auf das querende zweite Kraftfahrzeug 10 bei ungebremster Fahrt im Frontbereich FB, d. h. vor dem Fahrgastzellenbereich PB, liegt. Ist dies der Fall (Alternative: Ja), so wird das Verfahren mit Schritt S5 fortgesetzt. Andernfalls (Alternative: Nein) wird das Verfahren mit Schritt S6 fortgesetzt.

In Schritt S5 wird nun ermittelt, wiederum basierend auf der Geschwindigkeit des querenden zweiten Kraftfahrzeugs 10, der Geschwindigkeit des Kraftfahrzeugs 1 sowie dem Abstand des Kraftfahrzeugs 1 von dem querenden weiteren Kraftfahrzeug 10, bis zu welcher Stärke eines Bremseingriffs die Auftreffposition noch in dem Frontbereich FB verbleibt.

In Schritt S6 wird die Bremswirkung entweder vollständig unterbunden oder auf das in Schritt S5 ermittelte Maß eingestellt, so dass sichergestellt ist, dass durch eine zu starke Bremswirkung kein Auftreffen in dem Fahrgastzellenbereich PB erfolgt. Betätigt der Fahrer des ersten Kraftfahrzeugs 1 während dieser Phase das Bremspedal 8, so kann vorgesehen sein, dass die Bremspedalbetätigung übergangen wird und stattdessen die angeforderte Bremswirkung vollständig aufgehoben oder auf das in Schritt S5 ermittelte Maß reduziert wird. Das Einstellen des Maßes der Bremswirkung auf die in Schritt S5 ermittelte Höhe führt einerseits zu einem Reduzieren der Aufprallenergie und andererseits wird dadurch sichergestellt, dass kein Auftreffen auf den Fahrgastzellenbereich PB erfolgt und so die medizinische Unfallschwere gering bleibt.

In Schritt S6 kann zusätzlich zu dem Bremseingriff ein zusätzlicher Lenkeingriff des Kraftfahrzeugs 1 in Richtung zum Heckbereich FB des querenden zweiten Kraftfahrzeugs 10 vorgenommen werden, um den Abstand der seitlichen Auftreffposition weiter von dem Fahrgastzellenbereich PB zu entfernen.

In Schritt S7 wurde zuvor erkannt, dass bei ungebremster Fahrt des ersten Kraftfahrzeugs 1 eine Auftreffposition innerhalb des Fahrgastzellenbereichs PB auftritt. Daher wird vorgesehen, eine größtmögliche Bremsstärke einzustellen. Dadurch verschiebt sich die Auftreffposition auf der Seite des querenden zweiten Kraftfahrzeugs 10 in Fahrtrichtung nach hinten und es wird dadurch versucht, die Auftreffposition in den Heckbereich HB zu verschieben, um so keinen Aufprall innerhalb des Fahrgastzellenbereichs PB zu verursachen, der mit einer hohen medizinischen Unfallschwere verbunden ist.

Durch einen zusätzlichen Lenkeingriff an dem ersten Kraftfahrzeug 1 in Richtung zum Heckbereich HB des querenden zweiten Kraftfahrzeugs 10 kann die Verschiebung der seitlichen Auftreffposition in Richtung des Hecks des zweiten Kraftfahrzeugs 10 erhöht werden. Insbesondere kann vorgesehen sein, dass der Lenkeingriff nur dann erfolgt, wenn die Bremswirkung des größtmöglichen Bremseingriffs nicht ausreicht, um die Auftreffposition aus dem Fahrgastzellenbereich PB in den Heckbereich HB zu verschieben. Dies ist vorteilhaft, da durch einen Lenkeingriff immer die Gefahr besteht, dass das betreffende erste Kraftfahrzeug 1 ins Schleudern gerät, mit entsprechend unvorhersehbaren Auswirkungen auf die Insassen des betreffenden Kraftfahrzeugs 1.

Wird in Schritt S4 festgestellt, dass selbst bei ungebremster Fahrt des Kraftfahrzeugs 1 ein Aufprall im Heckbereich HB des querenden zweiten Kraftfahrzeugs 10, d. h. bezüglich der Fahrtrichtung des zweiten Kraftfahrzeugs 10 hinter dem Fahrgastzellenbereich PB, erfolgt, so wird dies ebenfalls in Schritt S7 durch einen größtmöglichen Bremseingriff berücksichtigt, um die Aufprallenergie möglichst vor dem Aufprall auf das zweite Kraftfahrzeug 10 weitestgehend zu reduzieren. Ein automatischer Lenkeingriff sollte in diesem Fall nicht vorgenommen werden, um die Gefahr eines Schleuderns des ersten Kraftfahrzeugs 1 auszuschließen. In alternativen Ausführungsformen kann in diesem Fall auch ein Lenkeingriff durch den Fahrer des ersten Kraftfahrzeugs 1 unterbunden werden, um die Gefahr eines Schleuderns mit unvorhersehbaren Folgen zu minimieren.

Der Eingriff in die Lenkung des ersten Kraftfahrzeugs 1 erfolgt vorzugsweise ohne eine Betätigung bzw. Drehung des Lenkrads, da der Fahrer aus Reflex eine Lenkradbetätigungskraft gegen die Lenkeingriffsbewegung aufbringen würde. Stattdessen wird unabhängig von der Lenkradstellung eines (nicht gezeigten) Lenkrades ein Lenkeingriff durch die Lenkeingriffseinrichtung 7 als eine weitere Fahreingriffseinrichtung vorgenommen, und zwar ein Lenkeingriff in einem vorgegeben Gierwinkelbereich z.B. zwischen -9° und +9°. Der tatsächlich einzustellende Lenkwinkel bei einem Lenkeingriff kann insbesondere abhängig von der Eigengeschwindigkeit v_{E} des ersten Kraftfahrzeugs 1 gewählt werden, so dass ein Schleudern des Kraftfahrzeugs 1 möglichst vermieden werden kann.

Gemäß weiteren Ausführungsformen kann vorgesehen sein, dass bei Feststellen von Auftreffpositionen bei ungebremster Fahrt (Schritt S2) vor oder auf eine der Achsen 12, 13 des querenden zweiten Kraftfahrzeugs 10 die Bremswirkung so eingestellt bzw. unterbunden wird, dass vorzugsweise die Auftreffposition seitlich auf die Position der Achsen 12, 13 des querenden zweiten Kraftfahrzeugs 10 erfolgt, da die Querbelastbarkeit des querenden zweiten Kraftfahrzeugs 10 im Bereich der Vorder- und Hinterachse 12, 13 am größten ist.

Alternativ kann vorgesehen sein, dass bei Erkennen einer Auftreffposition, die in einem vorderen Abschnitt VPB des Fahrgastzellenbereichs PB liegt, durch Vermeiden eines Bremseingriffs bzw. Unterbinden des Bremseingriffs, falls der Fahrer das Bremspedal 8 betätigt, und durch Eingriff in die Lenkung in Richtung der Fahrtrichtung Q des querenden zweiten Kraftfahrzeugs 10 die Auftreffposition bezüglich der in Schritt S2 ermittelten Auftreffposition in Richtung der Vorderkante des querenden zweiten Kraftfahrzeugs 10 und somit nach außerhalb des Fahrgastzellenbereichs PB verschoben wird, um dadurch die medizinische Unfallschwere zu reduzieren. Diese Maßnahme wird nur dann eingeleitet, wenn eine Verschiebung der Auftreffposition durch den Lenkeingriff in den Frontbereich FB möglich ist. Dadurch definiert sich der vordere Abschnitt VPB des Fahrgastzellenbereichs PB als der Bereich, in dem durch den Lenkeingriff eine Auftreffposition in dem Frontbereich FB möglich ist. Ansonsten wird gemäß Schritt S7 eine größtmögliche Bremswirkung veranlasst, um die Auftreffposition aus dem Fahrgastzellenbereich PB in den Heckbereich HB des querenden zweiten Kraftfahrzeugs 10 zu verschieben.

## Patentansprüche

1. Verfahren zum Betreiben eines ersten Personenkraftwagens (1) bei Erkennen eines unvermeidbaren Aufpralls auf eine Seite eines zweiten Personenkraftwagens (10), um die Unfallschwere für die Insassen des zweiten Personenkraftwagens zu reduzieren, mit folgenden Schritten:
- Ermitteln einer seitlichen Auftreffposition auf den zweiten Personenkraftwagen (10) bei ungebremster Fahrt des ersten Personenkraftwagens (1) und
- Durchführen eines Fahreingriffs in den Betrieb des ersten Personenkraftwagens (1) abhängig von der ermittelten seitlichen Auftreffposition auf den zweiten Personenkraftwagen (10), wobei die ermittelte seitliche Auftreffposition auf den zweiten Personenkraftwagen (10) derart bestimmt wird, dass die resultierende Kraft auf die Vorderachse (12) oder die Hinterachse (13) des zweiten Personenkraftwagens (10) wirkt.

2. Verfahren nach Anspruch 1, wobei das Durchführen eines Fahreingriffs ein Vornehmen des Fahreingriffs und/oder ein Unterbinden eines durch einen Fahrer des ersten Personenkraftwagens (1) vorgenommenen Fahreingriffs und/oder ein Zulassen eines durch einen Fahrer des ersten Personenkraftwagens (1) vorgenommenen Fahreingriffs umfasst.

3. Verfahren nach Anspruch 2, wobei als der Fahreingriff ein Eingriff zum Beschleunigen des ersten Personenkraftwagens (1) oder ein Bremseingriff zum Bremsen des ersten Personenkraftwagens (1) durchgeführt wird.

4. Verfahren nach einem der Ansprüche 1 bis 3, wobei als der Fahreingriff ein Lenkeingriff zum Lenken des ersten Personenkraftwagens (1) durchgeführt wird.

5. Verfahren nach einem der Ansprüche 1 bis 4, wobei die seitliche Auftreffposition auf den zweiten Personenkraftwagen (10) mithilfe von Informationen über eine Querbewegung des zweiten Personenkraftwagens (10), insbesondere dessen Fahrgeschwindigkeit, über eine Position des zweiten Personenkraftwagens (10) bezüglich des ersten Personenkraftwagens (1) und über eine Eigengeschwindigkeit des ersten Personenkraftwagens (1) ermittelt wird.

6. Verfahren nach einem der Ansprüche 1 bis 5, wobei, wenn festgestellt wird, dass der Auftreffbereich bei ungebremster Fahrt des ersten Personenkraftwagens (1) in einem Frontbereich (FB) des zweiten Personenkraftwagens (10) liegt, ein Bremseingriff des Fahrers des ersten Personenkraftwagens (1) unterbunden wird.

7. Verfahren nach einem der Ansprüche 1 bis 6, wobei, wenn festgestellt wird, dass der Auftreffbereich bei ungebremster Fahrt des ersten Personenkraftwagens (1) in einem Frontbereich (FB) des zweiten Personenkraftwagens (10) liegt, durch den ersten Personenkraftwagen (1) ein Lenkeingriff in Fahrtrichtung des zweiten Personenkraftwagens (10) vorgenommen wird.

8. Verfahren nach einem der Ansprüche 1 bis 7, wobei, wenn festgestellt wird, dass der Auftreffbereich bei ungebremster Fahrt des ersten Personenkraftwagens (1) in einem Fahrgastzellenbereich (PB) oder einem Heckbereich (HB) des zweiten Personenkraftwagens (10) liegt, ein maximaler Bremseingriff vorgenommen wird.

9. Verfahren nach einem der Ansprüche 1 bis 8, wobei, wenn festgestellt wird, dass der Auftreffbereich bei ungebremster Fahrt des ersten Personenkraftwagens (1) in einem Fahrgastzellenbereich (PB) oder einem Heckbereich (HB) des zweiten Personenkraftwagens (10) liegt, durch den ersten Personenkraftwagen (1) ein Lenkeingriff entgegen der Fahrtrichtung des zweiten Personenkraftwagens (10) vorgenommen wird.

## Claims

1. Method for operating a first passenger vehicle (1) when an unavoidable impact against a side of a second passenger vehicle (10) is detected, in order to reduce the severity of the accident for the vehicle occupants of the second passenger vehicle, having the following steps:
- determining the position of a side impact against the second passenger vehicle (10) in the case of unbraked travel of the first passenger vehicle (1) and
- carrying out a driving intervention into the operation of the first passenger vehicle (1) as a function of the determined position of the side impact against the second passenger vehicle (10), wherein the determined position of the side impact against the second passenger vehicle (10) is determined in such a way that the resulting force acts on the front axle (12) or the rear axle (13) of the second passenger vehicle (10).

2. Method according to Claim 1, wherein the execution of a driving intervention comprises performing the driving intervention and/or preventing a driving intervention performed by a driver of the first passenger vehicle (1) and/or permitting a driving intervention performed by a driver of the first passenger vehicle (1).

3. Method according to Claim 2, wherein an intervention for accelerating the first passenger vehicle (1) or a braking intervention for braking the first passenger vehicle (1) is carried out as the driving intervention.

4. Method according to one of Claims 1 to 3, wherein a steering intervention for steering the first passenger vehicle (1) is executed as the driving intervention.

5. Method according to one of Claims 1 to 4, wherein the position of the side impact against the second passenger vehicle (10) is determined using information about a transverse movement of the second passenger vehicle (10), in particular the velocity thereof, about a position of the second passenger vehicle (10) with respect to the first passenger vehicle (1) and with respect to a speed of the first passenger vehicle (1).

6. Method according to one of Claims 1 to 5, wherein if it is detected that the impact region in the case of unbraked travel of the first passenger vehicle (1) lies in a front region (FB) of the second passenger vehicle (10), a braking intervention by the driver of the first passenger vehicle (1) is prevented.

7. Method according to one of Claims 1 to 6, wherein if it is detected that the impact region in the case of unbraked travel of the first passenger vehicle (1) lies in a front region (FB) of the second passenger vehicle (10), a steering intervention in the direction of travel of the second passenger vehicle (10) is prevented by the first passenger vehicle (1).

8. Method according to one of Claims 1 to 7, wherein if it is detected that the impact region in the case of unbraked travel of the first passenger vehicle (1) lies in a passenger cell region (PB) or a rear region (HB) of the second passenger vehicle (10), a maximum braking intervention is performed.

9. Method according to one of Claims 1 to 8, wherein if it is detected that the impact region in the case of unbraked travel of the first passenger vehicle (1) lies in a passenger cell region (PB) or a rear region (HB) of the second passenger vehicle (10), a steering intervention counter to the direction of travel of the second passenger vehicle (10) is performed by the first passenger vehicle (1).

## Revendications

1. Procédé pour faire fonctionner un premier véhicule léger (1) à la détection d'une collision inévitable avec un côté d'un deuxième véhicule léger (10), afin de réduire la sévérité de l'accident pour les occupants du deuxième véhicule léger, comprenant les étapes suivantes :
- détection d'une position d'impact latérale sur le deuxième véhicule léger (10) en conduite non freinée du premier véhicule léger (1) et
- mise en oeuvre d'une intervention sur la conduite dans le fonctionnement du premier véhicule léger (1) en fonction de la position d'impact latérale détectée sur le deuxième véhicule léger (10), la position d'impact latérale détectée sur le deuxième véhicule léger (10) étant déterminée de telle sorte que la force résultante agisse sur l'essieu avant (12) ou sur l'essieu arrière (13) du deuxième véhicule léger (10).

2. Procédé selon la revendication 1, dans lequel la mise en oeuvre d'une intervention de conduite comprend la réalisation de l'intervention de conduite et/ou une suppression d'une intervention de conduite effectuée par un conducteur du premier véhicule léger (1) et/ou une autorisation d'une intervention de conduite effectuée par un conducteur du premier véhicule léger (1).

3. Procédé selon la revendication 2, dans lequel on effectue en tant qu'intervention de conduite une intervention destinée à accélérer le premier véhicule léger (1) ou une intervention de freinage destinée à freiner le premier véhicule léger (1).

4. Procédé selon l'une quelconque des revendications 1 à 3, dans lequel on effectue en tant qu'intervention de conduite une intervention sur la direction afin de diriger le premier véhicule léger (1).

5. Procédé selon l'une quelconque des revendications 1 à 4, dans lequel la position d'impact latérale avec le deuxième véhicule léger (10) est détectée au moyen d'informations concernant un déplacement transversal du deuxième véhicule léger (10), en particulier sa vitesse de conduite, par le biais d'une position du deuxième véhicule léger (10) par rapport au premier véhicule léger (1), et par le biais d'une vitesse propre du premier véhicule léger (1).

6. Procédé selon l'une quelconque des revendications 1 à 5, dans lequel, lorsque l'on constate que la région d'impact en conduite non freinée du premier véhicule léger (1) se trouve dans une région avant (FB) du deuxième véhicule léger (10), une intervention de freinage du conducteur du premier véhicule léger (1) est supprimée.

7. Procédé selon l'une quelconque des revendications 1 à 6, dans lequel, lorsque l'on constate que la région d'impact en conduite non freinée du premier véhicule léger (1) se situe dans une région avant (FB) du deuxième véhicule léger (10), une intervention sur la direction est effectuée par le premier véhicule léger (1) dans la direction de conduite du deuxième véhicule léger (10).

8. Procédé selon l'une quelconque des revendications 1 à 7, dans lequel, lorsque l'on constate que la région d'impact en conduite non freinée du premier véhicule léger (1) se situe dans une région de l'habitacle des passagers (PB) ou dans une région arrière (HB) du deuxième véhicule léger (10), une intervention de freinage maximale est effectuée.

9. Procédé selon l'une quelconque des revendications 1 à 8, dans lequel, lorsque l'on constate que la région d'impact en conduite non freinée du premier véhicule léger (1) se situe dans une région de l'habitacle des passagers (PB) ou dans une région arrière (HB) du deuxième véhicule léger (10), une intervention sur la direction est effectuée par le premier véhicule léger (1) dans le sens opposé à la direction de conduite du deuxième véhicule léger (10).
